# EUROPEAN PATENT SPECIFICATION

(11) **EP 0 581 348 B1**
(45) Date of publication and mention of the grant of the patent: **11.03.1998**
(21) Application number: 93201897.1
(22) Date of filing: 08.05.1989
(51) Int. Cl.: F16L 55/165

(54) **Apparatus for lining installed pipes**
Vorrichtung zum Beschichten von verlegten Rohren
Dispositif pour le revêtement de tuyaux installés

(30) Priority: 09.05.1988 GB 8810894
(43) Date of publication of application: 02.02.1994
(62) Divisional of application: 89304598.9
(73) Proprietor: BG plc, Reading, Berkshire RG6 1PT (GB)
(72) Inventor: McGuire, Brian Edward, Oldham, OL2 7RW, Greater Manchester (GB)
(74) Representative: Morgan, David James

(56) References cited:
- GB-A- 807 413
- GB-A- 2 186 340
- US-A- 3 462 825

## Description

This invention relates to an apparatus for the lining of existing pipes. The invention will be described in relation to gas, oil and water supply pipes, but it will be appreciated that the invention is applicable to pipes of all kinds.

When lining installed pipes (which pipes when ground embedded are prone to crack due to ground movement) it is known to draw a heated liner of plastic tube through a die to reduce the diameter and then into a length of the existing pipe.

The present invention relates to improved apparatus lining installed pipework when using a swaging die to reduce the diameter of the liner pipe prior to its being drawn into the existing pipework. By "installed" pipework is meant pipework that has already been installed in position to carry out its intended purpose, such as for example, ground embedded pipework for gas, oil, water or sewage, pipework forming part of a larger installation, or pipework resting on the ground and laid down to connect a source of supply to the recipient such as an oil pipe connecting a well to a refinery or port.

In the case of ground embedded pipework it will be appreciated that the normal arrangement when such a process is being carried out will involve a winch adjacent to an excavation at one end of a length of pipe to be lined, whence a cable or similar flexible ligament passes through the length of pipe to a second excavation beyond which it is attached to the front end of a liner pipe of plastics material. Adjacent to the second excavation is a tube heating and compressing apparatus which has a heater and a size reduction die. At a downstream end of this apparatus there may be a reciprocatable "pusher" which can grip the pipe and draw it from the apparatus and urge it towards the pipe to be lined.

GB-A-807,413 discloses a process for the lining of pipes of non-thermoplastic resin, comprising the steps of passing a synthetic resin liner having a mean outer diameter greater than the inside diameter of the non-thermoplastic pipe through a die having an inside diameter less than the original mean outer diameter of the resin liner and less than or substantially equal to the inner diameter of the non-thermoplastic pipe, after having heated said resin liner to a temperature at which the synthetic resin undergoes deformations which may be temporarily set by cooling but are substantially eliminated by subsequent heat treatment, introducing the synthetic resin liner after its passage through the die into the non-thermoplastic pipe and subjecting the resin liner, when it has been in the non-thermoplastic pipe, to a heat treatment comprising the steps of bringing said resin liner to a temperature sufficiently high so that the deformations due to the passage of the liner through the die are eliminated to the extent allowed by the presence of the non-thermoplastic pipe.

US-A-3462825 discloses a method of tightly lining a tubular member with a fluorocarbon resin liner having an outside diameter substantially greater than the inside diameter of the tubular member, comprising the steps of securely gripping one end of the liner for axial tensioning and pulling, progressively pulling the liner through a reduction die for reducing said liner to an outside diameter slightly less than the inside diameter of the tubular member and then through and into the tubular member without relaxing the pulling tension.

According to one aspect of the present invention there is provided apparatus for lining installed pipework as defined in claim 1.

In one preferred aspect of the present invention, the liner pipe may be heated prior to the swaging operation. Alternatively, or in addition, the liner pipe may also be heated during its passage through the swaging die. In such a case, means are provided for heating the internal surface of the swaging die simultaneously with the passage of the liner pipe through it.

According to another aspect of the present invention, an apparatus is provided for lining installed pipework as defined in claim 4.

Dies used according to the prior art methods of pipe swaging as employed in practice have comprised two portions, the first being the inclined swaging surface reducing in diameter to a minimum value and the second being an axial continuation of the die interior having its walls parallel to the die axis and an internal diameter equal to such minimum value. We have found that in the carrying out of the present invention, it is advantageous to reduce the axial length of the said second portion relative to the axial length of the first portion, or else to dispense with the second portion altogether. In particular, by so designing the die that is at least 70%, and preferably over 80%, and advantageously over 85% of the axial distance between the part where the liner pipe engages with the inclined surface and the outlet orifice where the pipe emerges from the die, the pulling tension required to swage the liner pipe is substantially decreased. Another consequence of the use of such a die in the carrying out of the present invention is that, when using a liner pipe or synthetic hydrocarbon resins such as polyethylene or modified polyethylene as conventionally used in practice, the liner pipe on emerging from such outlet orifice manifests a greater tendency towards radial expansion relative to the degree of swaging exerted by the die than in the case where, as in the prior art, the swaging die was provided with a second portion as mentioned above of substantial length, typically in the order of 50% of the overall die length. On release of pulling tension such tendency will result in a greater proportional radial expansion in relation to the pulling tension employed than would have occurred using the prior art dies.

The present invention relies both upon the expansion of the liner pipe within the pipework as a result of relaxation of the pulling tension and also as a result of the memory induced expansion of the swaged liner pipe. By the use of a die having a reduced axial length of its second portion relative to the axial length of its first portion as mentioned above the proportionate expansion resulting from the relaxation of the pulling tension may be significantly increasing thus resulting in improved control over the pipe lining operation.

The arrangements described above furthermore provide a significant advantage in relation to the case where a "pusher" device as e.g. of the kind described in Patent Application UK No. 2215804A (published 27/09/89) is used. It is inherent in the operation of such a pusher that, when it grips the liner pipe and urges it towards the pipework to be lined, there is experienced a temporary reduction in the pulling tension exerted by the pulling device (such as a winch) at the far end of the pipework. Upon the pusher releasing its grip, the tension resorts back to its original value. In practice, this results in a continuous fluctuation in the tension. It is desirable that the changeover between maximum and minimum tensions in the course of the fluctuations be affected as smoothly as possible and with the minimum amount of sharp transitions or jerks.

We have found that as a result of the preferred use of the dies of the present invention which require substantially lower pulling tensions to effect a comparable degree of swaging as compared with prior art dies and which furthermore bring about a greater "springback" tendency on the part of the pipe emerging from the die orifice, the amplitudes of the fluctuations are reduced and the fluctuations themselves become smoother. Having regard to the very high forces involved in exerting the pulling tension, this again constitutes a significant improvement in both the safety and the efficiency of the operations.

The length of the pipework which may be lined in a single operation by the methods of this invention may typically be from 10 metres upwards. The limiting length of pipework which may be lined in any particular case will depend upon a combination of factors including the friction resistance to the movement of the liner within the pipework, the extent to which the liner pipe with reduced diameter after insertion into the pipework becomes subject to deformation (a problem encountered with larger diameter liner pipes of relatively large SDR ratio), the limiting tension on the leading end of the liner pipe beyond which it may suffer permanent damage or elongation, the capacity of the mechanism (such as a winch) operating the pulling means and the uniformity of diameter and/or direction or otherwise of the pipework interior. The most suitable practicable length to be lined in any particular case can readily be ascertained by trial and error. By the method of the present invention, it becomes possible to line lengths of pipework up to 450 metres or more. The surface finish of the die may be provided by means known in the art. It is preferred that such surface finish should be at least down to N7 typically down to N6 preferably down to N5 and ideally in the order of N4 or lower.

It has been found advantageous to employ a die having a relatively shallow angle of inclination of the inclined surface of the die axis and within the range of 12 degrees to 29 degrees and preferably from 20 degrees to 25 degrees. Reduction of the angle assists in reducing the pulling load required to effect compression of the liner pipe but at the same time increases the area of the swaging surface for any given degree of compression. The optimum angle will be that which, in any particular case, minimises the overall disadvantages of a highload to bring about compression on the one hand and a large friction inducing die surface area on the other hand. The die surface may be frusto conical in shape. Alternatively, it may have a variable angle of inclination to the die axis within the above stated limits. It is a significant and advantageous feature of the present invention that when using a liner pipe made of a deformable memory retaining material in accordance with the method of the invention, the liner pipe may be left to expand radially within the lined pipework and under the influence of the memory of the material constituting it. By suitable choice of initial diameter of the liner pipe, degree of compression during the swaging operation and die orifice diameter in relation to the internal diameter of the pipework to be lined, the present invention can bring about the provision of a close fitting lining to the pipework resulting, (following relaxation of tension) from the memory induced expansion of the pipelining at the ambient temperatures and pressure within the pipework. It is unnecessary to have recourse to the means provided by the prior art for expanding the pipe lining within the pipework such as the application or internal super atmospheric pressure or the application of heat to the pipelining from within or the initial application of very high stretching forces to the pipelining to bring about an initial reduction in its diameter prior to insertion into the pipework. The precise operating conditions employed in order to carry out the method of the present invention will depend upon the several factors referred to above in any particular case and will vary according to the pipework internal diameter and the purpose for which it is put to use (for example whether for water or gas), the material of the pipelining and the SDR of the pipelining. (By SDR is meant the ratio of the diameter of the pipelining before swaging to its wall thickness).

A preferred material for the liner pipe is polyethylene, but other materials having the necessary memory retaining characteristics, such as a co-polymer of polyethylene and at least one alphaolefin of up to ten carbon atoms may equally be used. Although the reduction in diameter of the liner pipe during passage through the swaging die may be up to 15%, reductions in the range 5.0% to 9.8% are preferred. The reduction should be such as to allow drawing of the liner pipe through the existing pipe. This somewhat simple requirement is complicated by the fact that existing pipes are often not accurately sized internally, that the internal diameter may vary along the length of the pipe, and that the rate of recovery of the liner pipe may vary with ambient conditions and with the material from which the pipe is made. The wall thickness of the liner pipe should be as thin as possible consistent with the use to which the pipe is to be put and the requirement to provide adequate internal sealing of the existing pipe. A ratio of wall thickness to diameter of the liner pipe in the range 10 to 46 is preferred.

The maximum tension chosen for pulling the liner pipe through the existing pipe should advantageously be in the range 45% to 55% of the yield strength of the liner pipe in question, and in particular about 50%. The ratio of the throat diameter of the die to the diameter of the existing pipe should advantageously be in the range 1.05:1 to 1.15:1.

In order that the invention may be more clearly understood one embodiment of the invention will now be described by way of example, with reference to the accompanying drawings, in which:-
Figure 1 is a side elevational view in section of one form of apparatus according to the invention, and
Figure 2 is a side elevational view in section of a modification of the apparatus shown in Figure 1.

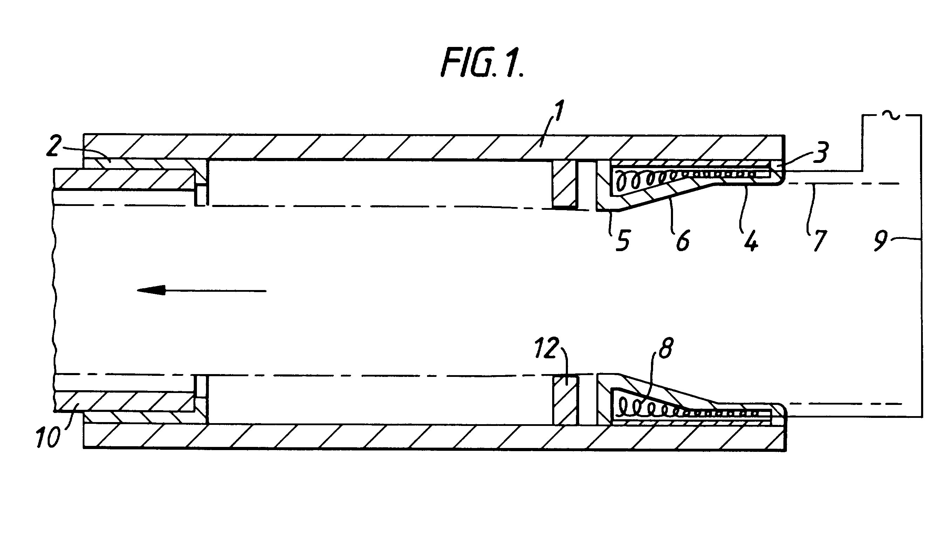

Referring to Figure 1, the apparatus comprises a supporting structure 1 which incorporates a pipe clamp 2 at one end and a swaging die 3 at the other. The swaging die 3 is generally cylindrical and comprises a section of larger diameter 4 joined to a section of smaller diameter 5 by a conical section 6. The swaging die has a polished swaging surface which is inclined at an angle of between 6 degrees and 32 degrees to the axis of the die advantageously between 12 degrees to 29 degrees and preferably between 20 degrees to 25 degrees. The polish is at least down to N7, typically down to N6 preferably down to N5 and ideally in the order of N4 or lower. The ratio between the diameters at 4 and 5 is preferably in the range 1.05:1 to 1.15:1. This has been found to provide an adequate level of clearance between pipe liner and internal pipe diameter for most normal pipes and to be comfortably within the diametric dimensional recovery of the material.

The body of the die 3 in the embodiment illustrated is hollow and houses an electrical heating coil 8 which is supplied with electricity via an electrical supply circuit 9. Power supply to the heating coil is applied to heat the liner pipe to a temperature within the range 35 degrees centigrade to 95 degrees centigrade and preferably to about 50 degrees centigrade. On leaving the die, the swaged liner pipe is cooled by means of an annular heat exchanger 12 which is disposed around the pipe and which extracts heat from the pipe. The heat exchange medium may be carbon dioxide, air, water or any other suitable fluid.

The pipe clamp 2 is fixed to the free end of existing pipe and provides in conjunction with the existing pipe, referenced 10, an anchor against which the liner pipe 7 may be pulled. The supporting structure to which the pipe clamp is connected may be tubular in form or may consist of a plurality of arms connecting the pipe clamp 2 and swaging die 3 together.

In operation of the apparatus, a length of liner pipe 7 of polyethylene or other suitable material may be mitred at one end or pre-formed effectively to form a nose cone at that end over which an apertured metal nose cone may be fitted. A ratio of wall thickness to diameter of the liner pipe in the range 10 to 46 is preferred. Holes are punched in the mitre sections which correspond with those in the metal nose cone and through which a cable is connected to the pipe. The cable is threaded through the swaging die 3 and the existing pipeline and connected to some form of pulling device such as a winch appropriately anchored. The electrical supply is switched on to heat the die to the required temperature and the mitred end of the liner pipe is introduced into the upstream end of the die. Tension in the cable is increased to the required value (usually between 45% and 55% of the yield strength of the liner pipe in question and in particular 50%) until the liner pipe begins to move through the die and be pulled into the existing pipeline. The liner pipe is pulled in this way completely through the existing pipe. The cable is released and the memory characteristic of the material of the pipe is then permitted to expand the pipe until it contacts the internal surface of the existing pipe.

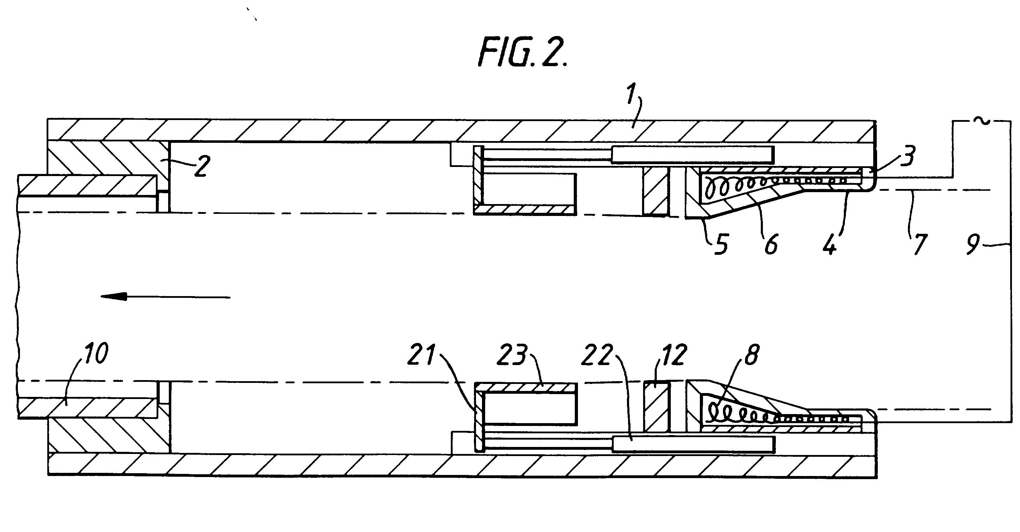

If desired, the pipe may be assisted through the existing pipe by means of a liner pipe pusher machine. Such an arrangement is illustrated in Figure 2 of the drawings. Referring to this figure, the pusher machine, which generally comprises a frame 21, hydraulic cylinder 22, clamp ring 23 and ancillaries is disposed between the swaging die 3 and pipe claim 2. In operation, this machine pulls the liner pipe through the swaging die 3 and pushes it into the existing pipeline.

It will be appreciated that the above embodiments have been described by way of example only. For example the liner pipe may be heated prior to entry into the swaging die as in the manner described in GB-A-2186340.

## Claims

1. Apparatus for lining installed pipework comprising a swaging die for reducing the diameter of a liner pipe passed through the die and a pusher device to grip the liner pipe and urge the liner pipe towards and through the pipework, both the die and the pusher device being, in use, spaced from the pipework, characterised in that the die (3) is provided with a swaging surface which, or part of which, is inclined at an angle between 6 degrees and 32 degrees and no part at an angle of more than 32 degrees to the die axis, a support structure (1) is provided to support the swaging die (3) and the pusher device (21,22,23) and fixing means (2) is provided to fix the structure at a spacing from the pipework (10) so that both the die (3) and the pusher device (21,22,23) are spaced from the pipework (10), the pusher device (21,22,23) being located between the swaging die (3) and the pipework (10) so that the pusher device (21,22,23) is able, in use, to grip the liner pipe (7) after its emergence from the die (3) before urging the liner pipe (7) towards and through the pipework (10).

2. Apparatus as claimed in claim 1, characterised in that means (8) are provided to heat the die (3) so that the liner pipe (7) is heated before it emerges from the die (3).

3. Apparatus as claimed in claim 1 or claim 2, characterised in that means (8) are located within the spacing to cool the heated liner pipe (7) as it emerges from the die (3).

4. Apparatus for lining installed pipework comprising swaging die for reducing the diameter of a liner pipe passed through the die, means for heating the liner pipe before it emerges from the die and means for cooling the heated liner pipe as it emerges from the die, characterised in that the die (3) is provided with a swaging surface which, or part of which, is inclined at an angle between 6 degrees and 32 degrees and no part at an angle of more than 32 degrees to the die axis, a support structure (1) is provided to support the swaging die (3) and the cooling means (12) and fixing means (2) is provided to fix the structure at a spacing from the pipework (10) so that both the die (3) and the cooling means (12) are spaced from the pipework (10).

5. Apparatus as claimed in any of claims 2 to 4, characterised in that the die (3) has a hollow body in which there are located the means (8) for heating the die (3).

6. Apparatus as claimed in claim 5, characterised in that the heating means (8) comprises an electrical heating coil (8) which in use is supplied with electricity by way of an electrical supply circuit.

7. Apparatus as claimed in any of claims 1 to 6, characterised in that the angle of inclination of the swaging surface is between 32° and 29°.

8. Apparatus as claimed in claim 7, characterised in that the angle of the swaging surface is between 20°C and 25°C.

9. Apparatus as claimed in any of claims 2 to 8, characterised in that the inclined surface extends over an axial length that represents a proportion of at least 70% of the overall axial distance between that part of the swaging surface that has the maximum diameter and the die outlet.

10. Apparatus as claimed in claim 9, characterised in that the proportion is at least 80%.

11. Apparatus as claimed in claim 10, characterised in that the proportion is at least 85%.

12. Apparatus as claimed in any of the preceding claims, characterised in that the walls of that part of the die interior that extends between the said swaging surface and the outlet are parallel to the die axis.

## Patentansprüche

1. Vorrichtung zum Auskleiden von verlegten Rohren, mit einer Einschnürmatrize zur Reduzierung des Durchmessers eines Auskleidungsrohres, das durch die Matrize hindurch bewegt wird, und mit einer Schiebevorrichtung zum Ergreifen des Auskleidungsrohres und Treiben desselben in Richtung auf das Rohrwerk und durch dieses hindurch, wobei sowohl die Matrize als auch die Schiebervorrichtung beim Einsatz vom Rohrwerk beabstandet sind, dadurch gekennzeichnet, daß die Matrize (3) mit einer Gesenkoberfläche versehen ist, die oder von der ein Teil in einem Winkel zwischen 6° und 32° und kein Teil in einem Winkel von mehr als 32° zur Matrizenachse geneigt ist, daß ein Halteaufbau (1) vorgesehen ist, um die Einschnürmatrize (3) und die Schiebervorrichtung (21, 22, 23) abzustützen, und daß eine Befestigungseinrichtung (2) vorgesehen ist, um den Aufbau in einem Abstand vom Rohrwerk (10) zu befestigen, so daß sowohl die Matrize (3) als auch die Schiebervorrichtung (21, 22, 23) vom Rohrwerk (10) beabstandet sind, wobei die Schiebervorrichtung (21, 22, 23) zwischen der Einschnürmatrize (3) und dem Rohrwerk (10) angeordnet ist, derart, daß die Schiebervorrichtung (21, 22, 23) beim Einsatz in der Lage ist, das Auskleidungsrohr (7) nach seinem Austritt aus der Matrize (3) zu ergreifen, bevor das Auskleidungsrohr (7) in Richtung auf das Rohrwerk (10) und durch dieses hindurch gedrückt wird.

2. Vorrichtung nach Anspruch 1, dadurch gekennzeichnet, daß Mittel (8) vorgesehen sind, um die Matrize (3) zu beheizen, so daß das Auskleidungsrohr (7) erhitzt wird, bevor es aus der Matrize (3) austritt.

3. Vorrichtung nach Anspruch 1 oder 2, dadurch gekennzeichnet, daß Mittel (12) innerhalb des Freiraumes angeordnet sind, um das erwärmte Auskleidungsrohr (7) zu kühlen, sobald es aus der Matrize (3) austritt.

4. Vorrichtung zum Auskleiden eines verlegten Rohrwerks, mit einer Einschnürmatrize zur Reduzierung des Durchmessers eines Auskleidungsrohres, das durch die Matrize hindurch bewegt wird, mit Mitteln zum Erwärmen des Auskleidungsrohres, bevor es aus der Matrize austritt, und mit Mitteln zum Kühlen des erwärmten Auskleidungsrohres, sobald es aus der Matrize austritt, dadurch gekennzeichnet, daß die Matrize (3) mit einer Gesenkoberfläche versehen ist, die oder von der ein Teil in einem Winkel zwischen 6° und 32° und kein Teil in einem Winkel von mehr als 32° zur Matrizenachse geneigt ist, daß ein Halteaufbau (1) vorgesehen ist, um die Einschnürmatrize (3) und die Kühleinrichtung (12) abzustützen, und daß eine Befestigungseinrichtung (2) vorgesehen ist, um den Aufbau in einem Abstand vom Rohrwerk (10) zu befestigen, so daß sowohl die Matrize (3) als auch die Kühleinrichtung (12) vom Rohrwerk (10) beabstandet sind.

5. Vorrichtung nach einem der Ansprüche 2 bis 4, dadurch gekennzeichnet, daß die Matrize (3) einen Hohlkörper aufweist, in dem die Mittel (8) zum Beheizen der Matrize (3) untergebracht sind.

6. Vorrichtung nach Anspruch 5, dadurch gekennzeichnet, daß die Heizmittel (8) eine elektrische Heizwicklung (8) aufweisen, die bei Gebrauch mit elektrischem Strom mittels eines elektrischen Versorgungs-Stromkreises versorgt wird.

7. Vorrichtung nach einem der Ansprüche 1 bis 6, dadurch gekennzeichnet, daß der Neigungswinkel der Gesenkoberfläche zwischen 12° und 29° beträgt.

8. Vorrichtung nach Anspruch 7, dadurch gekennzeichnet, daß der Neigungswinkel der Gesenkoberfläche zwischen 20° und 25° beträgt.

9. Vorrichtung nach einem der Ansprüche 2 bis 8, dadurch gekennzeichnet, daß die geneigte Oberfläche sich über eine axiale Länge erstreckt, die einen Anteil von mindestens 70 % des gesamten axialen Abstandes zwischen jenem Teil der Gesenkoberfläche, der den maximalen Durchmesser hat, und dem Matrizenauslaß ausmacht.

10. Vorrichtung nach Anspruch 9, dadurch gekennzeichnet, daß der Anteil mindestens 80 % beträgt.

11. Vorrichtung nach Anspruch 10, dadurch gekennzeichnet, daß der Anteil mindestens 85 % beträgt.

12. Vorrichtung nach einem der vorangehenden Ansprüche, dadurch gekennzeichnet, daß die Wände jenes Teils des Matrizeninneren, der sich zwischen der Gesenkoberfläche und dem Auslaß erstreckt, parallel zur Matrizenachse verlaufen.

## Revendications

1. Appareil pour revêtir une tuyauterie installée, comprenant une filière de rétreinte pour réduire le diamètre d'un tuyau de revêtement amené à passer par la filière et un dispositif poussoir pour saisir le tuyau de revêtement et repousser le tuyau de revêtement vers et dans la tuyauterie, aussi bien la filière que le dispositif poussoir étant placés, à l'utilisation, à distance de la tuyauterie, caractérisé en ce que la filière (3) comporte une surface de rétreinte qui, ou dont une partie est inclinée d'un angle compris entre 6 degrés et 32 degrés et donc aucune partie n'inscrit un angle de plus de 32 degrés avec l'axe de la filière, une structure de support (1) est aménagée pour supporter la filière de rétreinte (3) et le dispositif poussoir (21, 22, 23) et un moyen de fixation (2) est prévu pour fixer la structure de manière à ménager un espacement entre elle et la tuyauterie (10) de façon qu'aussi bien la filière (3) que le dispositif poussoir (21, 22, 23) soient distants de la tuyauterie (10), le dispositif poussoir (21, 22, 23) étant placé entre la filière de rétreinte (3) et la tuyauterie (10) de façon que le dispositif poussoir (21, 22, 23) soit capable, à l'utilisation, de saisir le tuyau de revêtement (7) à sa sortie de la filière (3) avant de repousser le tuyau de revêtement (7) vers et dans la tuyauterie (10).

2. Appareil selon la revendication 1, caractérisé en ce que des moyens (8) sont prévus pour chauffer la filière (3) de façon que le tuyau de revêtement (7) soit chauffé avant sa sortie de la filière (3).

3. Appareil selon la revendication 1 ou la revendication 2, caractérisé en ce que des moyens (8) sont placés à l'intérieur de l'espacement pour refroidir le tuyau chauffé de revêtement (7) à sa sortie de la filière (3).

4. Appareil de revêtement d'une tuyauterie installée, comprenant une filière de rétreinte pour réduire le diamètre d'un tuyau de revêtement amené à passer par la filière, un moyen pour chauffer le tuyau de revêtement avant sa sortie de la filière et un moyen pour refroidir le tuyau chauffé de revêtement à sa sortie de la filière, caractérisé en ce que la filière (3) comporte une surface de rétreinte qui, ou dont une partie, est inclinée d'un angle compris entre 6 degrés et 32 degrés et donc aucune partie n'inscrit un angle de plus de 32 degrés avec l'axe de la filière, une structure de support (1) est aménagée pour supporter la filière de rétreinte (3) et le moyen de refroidissement (12) et un moyen de fixation (2) est prévu pour fixer la structure de manière à ménager un espacement entre elle et la tuyauterie (10) de manière qu'aussi bien la filière (3) que le moyen de refroidissement (12) soient à distance de la tuyauterie (10).

5. Appareil selon l'une quelconque des revendications 2 à 4, caractérisé en ce que la filière (3) comprend un corps creux dans lequel sont placés les moyens (8) de chauffage de la filière (3).

6. Appareil selon la revendication 5, caractérisé en ce que le moyen de chauffage (8) consiste en un bobinage électrique de chauffage (8) qui, à l'utilisation, est alimenté en électricité au moyen d'un circuit électrique d'alimentation.

7. Appareil selon l'une quelconque des revendications 1 à 6, caractérisé en ce que l'angle d'inclinaison de la surface de rétreinte est compris entre 12° et 29°.

8. Appareil selon la revendication 7, caractérisé en ce que l'angle de la surface de rétreinte est compris entre 20°C et 25°C.

9. Appareil selon l'une quelconque des revendications 2 à 8, caractérisé en ce que la surface inclinée se prolonge sur une longueur axiale qui représente une proportion d'au moins 70% de la distance axiale globale séparant la partie de la surface de rétreinte qui a le diamètre maximal et la sortie de la filière.

10. Appareil selon la revendication 9, caractérisé en ce que la proportion est d'au moins 80%.

11. Appareil selon la revendication 10, caractérisé en ce que la proportion est d'au moins 85%.

12. Appareil selon l'une quelconque des revendications précédentes, caractérisé en ce que les parois de la partie de l'intérieur de la filière qui est située entre ladite surface de rétreinte et la sortie sont parallèles à l'axe de la filière.
